# EUROPEAN PATENT SPECIFICATION

(11) **EP 3 703 328 B1**
(45) Date of publication and mention of the grant of the patent: **08.09.2021**
(21) Application number: 18870869.7
(22) Date of filing: 10.05.2018
(51) Int. Cl.: H04L 29/06, G06F 8/76

(54) **RSSP-II SECURITY PROTOCOL SEPARATION AND DEPLOYMENT METHOD**
VERFAHREN ZUR TRENNUNG UND ANWENDUNG EINES RSSP-II-SICHERHEITSPROTOKOLLS
PROCÉDÉ DE SÉPARATION ET DE DÉPLOIEMENT DE PROTOCOLE DE SÉCURITÉ RSSP-II

(30) Priority: 25.10.2017 CN 201711007878
(43) Date of publication of application: 02.09.2020
(73) Proprietor: CRSC RESEARCH & DESIGN INSTITUTE GROUP CO., LTD., Fengtai District Beijing 100070 (CN)
(72) Inventor: WANG, Yimin, Beijing 100070 (CN); LIU, Zhen, Beijing 100070 (CN); ZUO, Lin, Beijing 100070 (CN); GUO, Weiwei, Beijing 100070 (CN); HUANG, Yaqian, Beijing 100070 (CN); MENG, Qingyao, Beijing 100070 (CN); LIU, Xiaodong, Beijing 100070 (CN); YE, Feng, Beijing 100070 (CN)
(74) Representative: Würmser, Julian
(86) International application number: PCT/CN2018/086259
(87) International publication number: WO 2019/080478

(56) References cited:
- WO-A1-2011/116583
- CN-A- 1 276 672
- CN-A- 101 820 361
- CN-A- 103 051 616
- CN-A- 103 051 616
- CN-A- 103 984 561
- CN-A- 107 979 587
- MENGHUA XU ET AL: "Simulation and Verification of RSSP-II Safety Communication Protocol", BUSINESS COMPUTING AND GLOBAL INFORMATIZATION (BCGIN), 2012 SECOND INTERNATIONAL CONFERENCE ON, IEEE, 12 October 2012 (2012-10-12), pages 731-734, XP032283054, DOI: 10.1109/BCGIN.2012.196 ISBN: 978-1-4673-4469-2

## Description

### TECHNICAL FIELD

The present disclosure relates to the field of secure communication technology, and more particularly, to an RSSP-II safety protocol separate deployment method.

### BACKGROUND

MENGHUA XU ET AL: "Simulation and Verification of RSSP-II Safety Communication Protocol", BUSINESS COMPUTING AND GLOBAL INFORMATIZATION (BCGIN), 2012 SECOND INTERNATIONAL CONFERENCE ON IEEE, October 12, 2012 aims to disclose a Railway Signal Safety Communication protocol that is an upper layer protocol ensuring safety transmission of safety related information in a non-trusted channel. The paper also discusses simulations of a safety communication process of RSSP-II safety communication protocol.

In the rail traffic signal control system, safety information needs to be delivered among a variety of safety devices, not only the ground devices communicate in a closed communication network, but also the in-vehicle device and the ground device stand exchange data through an open network. The transmission of information in a communication network requires certain technical measures to meet certain safety standards in order to ensure safety and reliability of the information itself.

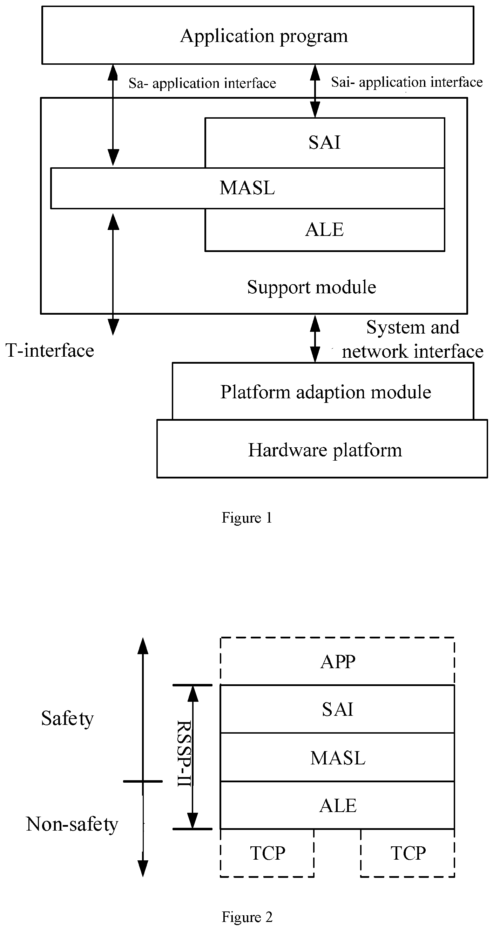

The RSSP-II safety communication protocol is a widely used safety communication transmission protocol specification based on Ethernet communication, its structure schematic diagram is shown in Figure 1 to Figure 2, it can be applied to a closed transmission system and an open transmission system, and applied to a traffic signal control system of high-speed railway, intercity railway and urban rail.

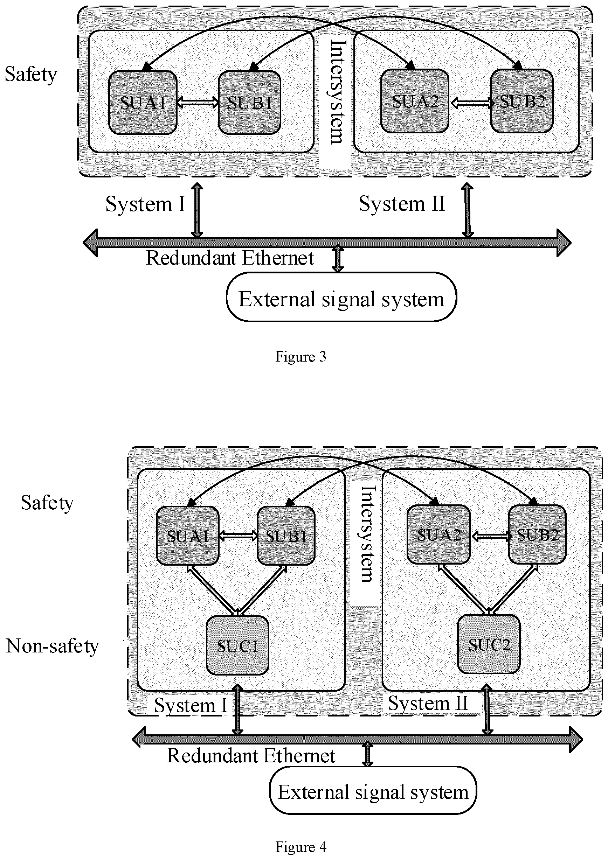

In the existing railway safety computer system, the mostly adopted is Double 2-vote-2 computer structure, two sets of redundant design, there are generally two platform implementation methods: as shown in Figure 3, the first type does not distinguish between safety functions and non-safety functions, each system includes an A/B machine. As shown in Figure 4, the second type distinguishes between the safety functions and the non-safety functions, each system includes a safety logic processing unit A/B machine and a communication unit C machine, wherein the logic processing unit A/B machine undertakes the safety function, the communication unit C machine does not undertake the safety function, the logic processing unit and the communication unit perform data interaction through Ethernet.

However, at present, when the RSSP-II secure communication protocol is deployed, due to the different platform structure in the actual environment, the current method of deploying the RSSP-II secure communication protocol cannot meet the requirements of different platform structures.

### SUMMARY

The objectives of the present disclosure are to provide an RSSP-II safety protocol separate deployment method to improve diversity of the deployed RSSP-II safety communication protocol and realize separate deployment for different architecture platforms.

To achieve the above objectives, the technical solutions adopted by the present disclosure are: providing an RSSP-II safety protocol separate deployment method, comprising steps of:
adding different adaptation layers to a protocol stack; and
using a corresponding adaptation layer to compile all RSSP-II functional modules of the protocol stack into a library file to be deployed into an A, B and C machine.

The adaptation layer includes a system adaptation layer, a network adaptation layer and an application adaptation layer, wherein A and B machine are safety logic processing unit and C machine is a communication unit.

Using a corresponding adaptation layer to compile all RSSP-II functional modules of the protocol stack into a library file to be deployed into an A, B and C machine specifically comprises:
when not distinguishing between safety functions and non-safety functions, compiling all RSSP-II functional modules of the protocol stack into a library file to be deployed to the A/B machine, wherein the adaptation layer added to the protocol stack is a system adaptation layer, a network adaptation layer and an application adaptation layer;
when distinguishing between safety functions and non-safety functions, compiling safety-related modules of the protocol stack RSSP-II into a library file to be deployed to the A/B machine, and compiling the non-safety modules into a library file to be deployed to the C machine, wherein the A/B machine adds a system adaptation layer and an application adaptation layer to the protocol stack, and the C machine adds a network adaptation layer and an application adaptation layer to the protocol stack.

Using a corresponding adaptation layer to compile all RSSP-II functional modules of the protocol stack into a library file to be deployed into an A, B and C machine further comprises:
separately compiling a safety-related module MASL layer of the protocol stack RSSP-II into an SFM module of Subset-037 to be deployed in the A/B machine, wherein a system adaptation layer and an application adaptation layer are added to the protocol stack.

Using a corresponding adaptation layer to compile all RSSP-II functional modules of the protocol stack into a library file to be deployed into an A, B and C machine further comprises:
sharing a safety-related module MASL layer between an SFM module of Subset-037 and the protocol stack RSSP-II, and compiling the SFM module and the MASL layer into a library file to be deployed to the A/B machine, wherein a system adaptation layer, a network adaptation layer and an application adaptation layer are added to the A/B machine.

Compared with the prior art, the present disclosure has the following technical effects: the present disclosure develops a series of adaptation layers around a core logic layer of the RSSP-II safety communication protocol, and then adds the corresponding adaptation layer to the protocol stack according to the target platform's architecture and functional module type and compiles the different functional modules into a library file to be deployed to the platform. In this way, the RSSP-II communication protocol can be developed as a universal safety software protocol library with cross-platform portability, enabling protocol deployment for different architecture platforms.

### BRIEF DESCRIPTION OF THE DRAWINGS

The specific implementations of the present disclosure will be described in detail below in conjunction with the drawings:
Figure 1 is a schematic diagram of structure of the RSSP-II safety communication protocol referred to in the background of the present disclosure;
Figure 2 is a schematic diagram of core logical layering of the RSSP-II safety communication protocol stack referred to in the background of the present disclosure;
Figure 3 is a schematic diagram of the safety computer structure in which each system includes an A/B machine referred to in the background of the present disclosure;
Figure 4 is a schematic diagram of the safety computer structure in which each system includes an A/B machine and a C machine referred to in the background of the present disclosure;
Figure 5 is a schematic flowchart of an RSSP-II safety protocol separate deployment method in the present disclosure;
Figure 6 is a schematic diagram of a separate deployment architecture of a secure communication protocol stack module in which safety functions and non-safety functions are not distinguished in the present disclosure;
Figure 7 is a schematic diagram of a module architecture in which safety-related modules are deployed in an A/B machine in the present disclosure;
Figure 8 is a schematic diagram of a module architecture in which non-safety modules are deployed in a C machine in the present disclosure;
Figure 9 is a schematic diagram of the architecture in which the safety-related module MASL layer of the protocol stack RSSP-II is separately compiled into the SFM module of Subset-037 and deployed in an A/B machine in the present disclosure;
Figure 10 is a schematic diagram of the communication protocol stack software architecture in which the safety RSSP-II and the Subset-037 function are simultaneously implemented in the present disclosure.

### DESCRIPTION OF THE EMBODIMENTS

To further illustrate the features of the present disclosure, reference may be made to the following detailed description and the attached drawings of the present disclosure.

The attached drawings are for reference and explanation only, not intended to limit the protection scope of the present disclosure.

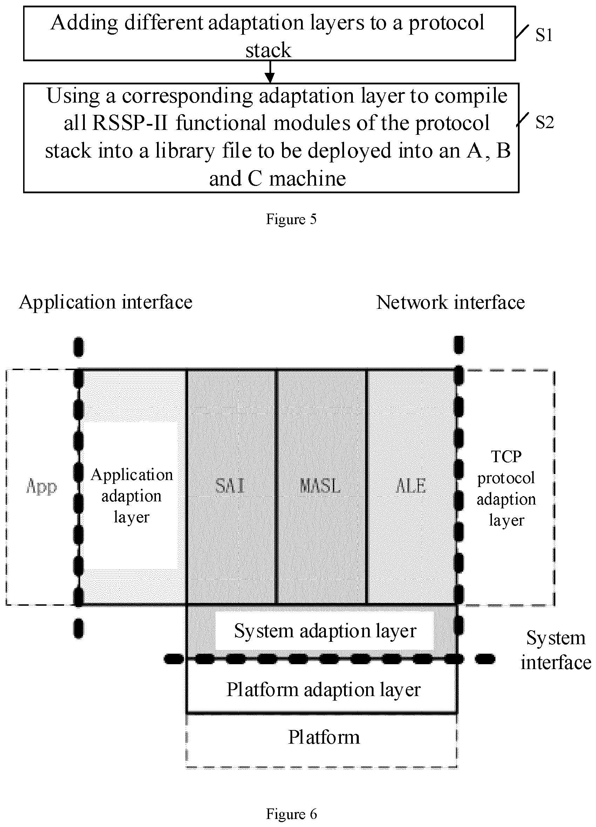

As shown in Figure 5, this embodiment discloses an RSSP-II safety protocol separate deployment method, including the following steps S1 to S2:
S1, adding different adaptation layers to a protocol stack;
S2, using a corresponding adaptation layer to compile all RSSP-II functional modules of the protocol stack into a library file to be deployed into an A, B and C machine.

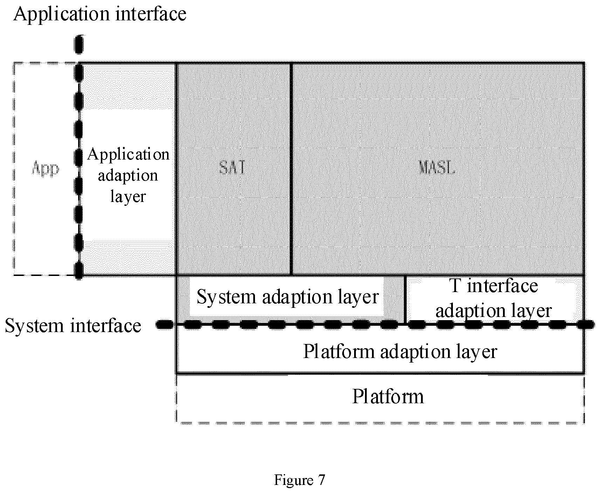

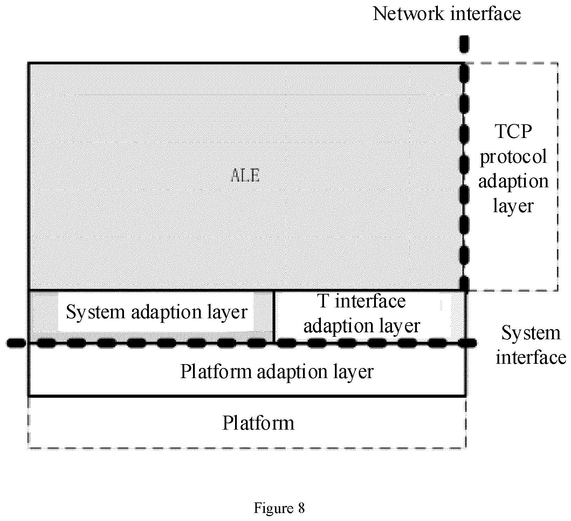

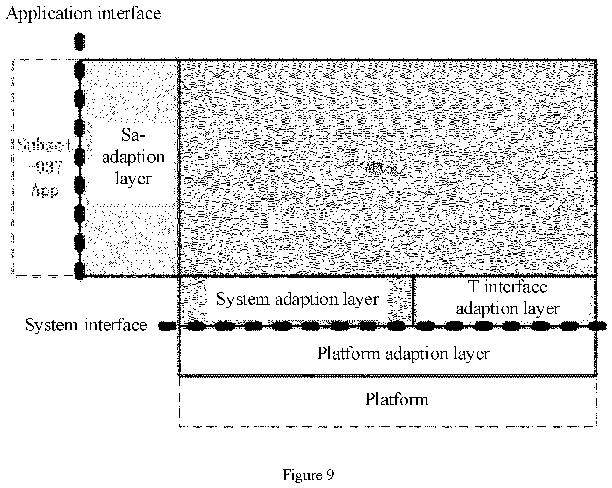

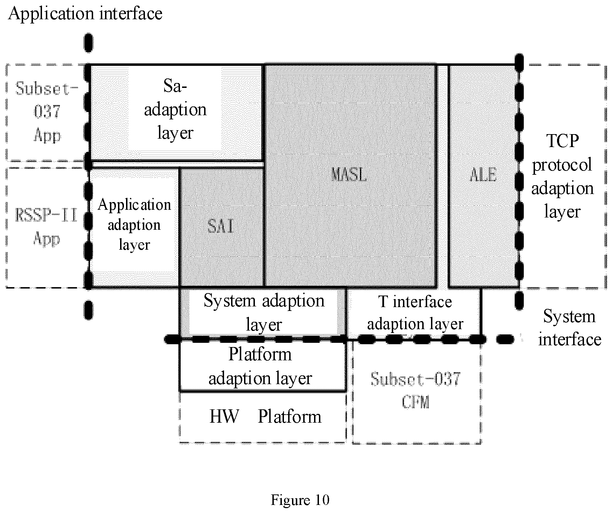

It should be noted that, in this embodiment, the software protocol stack can be transplanted in the following four ways for the different target architecture platforms and functional modules:
(1) As shown in Figure 6, when not distinguishing between safety functions and non-safety functions, all RSSP-II functional modules of the protocol stack are compiled into a library file to be deployed to the A/B machine, that is, the SAI layer, the MASL layer and the ALE layer of all RSSP-II functional modules, are all compiled into a library file and deployed to an A/B machine.
   It should be noted that, in this case, the adaptation layers added to the protocol stack are a system adaptation layer, a network adaptation layer and an application adaptation layer.
(2) When distinguishing between safety functions and non-safety functions, safety-related modules of the protocol stack RSSP-II, that is, the SAI layer and the MASL layer, are compiled into a library file to be deployed to the A/B machine, referring to Figure 7, and the non-safety modules, that is, the ALE layer, are compiled into a library file to be deployed to the C machine, referring to Figure 8.
   It should be noted that, in this case, the A/B machine adds a system adaptation layer and an application adaptation layer to the protocol stack, and the C machine adds a network adaptation layer and an application adaptation layer to the protocol stack.
   It should also be noted that the T-IF (T-interface) adaption layer shown in Figure 8 is used to implement the T primitive caching mechanism, for performing information exchange between the MASL layer and the ALE layer, or between the MASL layer and Subset-037 CFM module.
(3) As shown in Figure 9, a safety-related module MASL layer of the protocol stack RSSP-II is compiled separately into an SFM module of Subset-037 to be deployed in the A/B machine, wherein a system adaptation layer and an application adaptation layer are added to the protocol stack.
   It should be noted that the Sa- adaptation layer (SAAL) is used to implement the Sa primitive caching mechanism, for performing information interaction with the MASL layer and with the Subset-037 application layer program; the I-IF adaption layer is used to implement the T primitive cache mechanism, for implementing information exchange between the Subset-037 SFM and the CFM module.
(4) As shown in Figure 10, a safety-related module MASL layer is shared between an SFM module of Subset-037 and the protocol stack RSSP-II, and the SFM module and the MASL layer is compiled into a library file to be deployed to the A/B machine, wherein a system adaptation layer, a network adaptation layer and an application adaptation layer are added to the A/B machine.

It should be noted that in this way, the safety functional modules can also be deployed in the safety device, the A/B machine, and the non-safety part is deployed in the non-safety device, the C machine. A system adaptation layer and an application adaptation layer need to be added to the A/B machine, a system adaptation layer and a network adaptation layer need to be added to the C machine.

As shown in Figure 10, the Sa- adaptation layer is used to implement the Sa primitive caching mechanism, for performing information interaction with the MASL layer and with the Subset-037 application layer program; wherein the application adaptation layer is used to implement the SAI primitive caching mechanism, for implementing information interaction between the SAI module and the application layer program; the T-IF adaptation layer is used to implement the T primitive cache mechanism, for implementing information interaction between the Subset-037 SFM and the CFM module.

It should be noted that the RSSP-II safety protocol separate deployment method provided in this embodiment has the following beneficial effects:
(1) by developing a series of adaptation layers, protocol deployment for different architecture platforms can be realized for different architecture platforms and functional modules;
(2) the safety function part and non-safety function part of the RSSP-II communication protocol are separately deployed for different application scenarios, which greatly improves safety of the RSSP-II communication protocol.

The above are only the preferred embodiments of the present disclosure, which are not intended to limit the present disclosure, as defined by the appended claims.

## Claims

1. An RSSP-II safety protocol separate deployment method, comprising:
adding different adaptation layers to a protocol stack; and
using a corresponding adaptation layer to compile all RSSP-II functional modules of the protocol stack into a library file to be deployed into A, B and C machines;
**characterized in that** the adaptation layer includes a system adaptation layer, a network adaptation layer and an application adaptation layer; and
wherein the A and B machines are safety logic processing units and the C machine is a communication unit.

2. The RSSP-II safety protocol separate deployment method according to claim 1, wherein using a corresponding adaptation layer to compile all RSSP-II functional modules of the protocol stack into a library file to be deployed into the A, B and C machines specifically comprises:
when not distinguishing between safety functions and non-safety functions, compiling all RSSP-II functional modules of the protocol stack into a library file to be deployed to the A/B machine, wherein the adaptation layer added to the protocol stack is a system adaptation layer, a network adaptation layer and an application adaptation layer;
when distinguishing between safety functions and non-safety functions, compiling safety-related modules of the protocol stack RSSP-II into a library file to be deployed to the A/B machine, and compiling the non-safety modules into a library file to be deployed to the C machine, wherein the A/B machine adds a system adaptation layer and an application adaptation layer to the protocol stack, and the C machine adds a network adaptation layer and an application adaptation layer to the protocol stack.

3. The RSSP-II safety protocol separate deployment method according to any one of claims 1 to 2, wherein using a corresponding adaptation layer to compile all RSSP-II functional modules of the protocol stack into a library file to be deployed into the A, B and C machines further comprises:
separately compiling a safety-related module MASL layer of the protocol stack RSSP-II into an SFM module of Subset-037 to be deployed in the A/B machine, wherein a system adaptation layer and an application adaptation layer are added to the protocol stack.

4. The RSSP-II safety protocol separate deployment method according to any one of claims 1 to 3, wherein using a corresponding adaptation layer to compile all RSSP-II functional modules of the protocol stack into a library file to be deployed into the A, B and C machines further comprises:
sharing a safety-related module MASL layer between an SFM module of Subset-037 and the protocol stack RSSP-II, and compiling the SFM module and the MASL layer into a library file to be deployed to the A/B machine, wherein a system adaptation layer, a network adaptation layer and an application adaptation layer are added to the A/B machine.

## Patentansprüche

1. Verfahren zur separaten Anwendung eines RSSP-II-Sicherheitsprotokolls, umfassend:
verschiedene Adaptationsschichten einem Protokollstapel hinzuzufügen; und
eine entsprechende Adaptationsschicht zu verwenden, um alle RSSP-II-Funktionsmodule des Protokollstapels in einer Bibliotheksdatei zu kompilieren, die in A-, B- und C-Maschinen angewendet werden soll;
**dadurch gekennzeichnet, dass** die Adaptationsschicht eine Systemadaptationsschicht, eine Netzwerkadaptationsschicht und eine Anwendungsadaptationsschicht enthält; und
wobei die A- und B-Maschinen Sicherheitslogikverarbeitungseinheiten sind und die C-Maschine eine Kommunikationseinheit ist.

2. Verfahren zur separaten Anwendung eines RSSP-II-Sicherheitsprotokolls nach Anspruch 1, wobei das Verwenden einer entsprechenden Adaptationsschicht, um alle RSSP-II-Funktionsmodule des Protokollstapels in einer Bibliotheksdatei zu kompilieren, die in den A-, B- und C-Maschinen angewendet werden soll, speziell umfasst:
wenn nicht zwischen Sicherheitsfunktionen und Nichtsicherheitsfunktionen unterschieden wird, alle RSSP-II-Funktionsmodule des Protokollstapels in einer Bibliotheksdatei zu kompilieren, die auf die A/B-Maschine angewendet werden soll, wobei es sich bei der dem Protokollstapel hinzugefügten Adaptationsschicht um eine Systemadaptationsschicht, eine Netzwerkadaptationsschicht und eine Anwendungsadaptationsschicht handelt;
wenn zwischen Sicherheitsfunktionen und Nichtsicherheitsfunktionen unterschieden wird, sicherheitsbezogene Module des Protokollstapels RSSP-II in einer Bibliotheksdatei zu kompilieren, die auf die A/B-Maschine angewendet werden soll, und die Nichtsicherheitsmodule in einer Bibliotheksdatei zu kompilieren, die auf die C-Maschine angewendet werden soll, wobei die A/B-Maschine dem Protokollstapel eine Systemadaptationsschicht und eine Anwendungsadaptationsschicht hinzufügt, und die C-Maschine dem Protokollstapel eine Netzwerkadaptationsschicht und eine Anwendungsadaptationsschicht hinzufügt.

3. Verfahren zur separaten Anwendung eines RSSP-II-Sicherheitsprotokolls nach einem der Ansprüche 1 bis 2, wobei das Verwenden einer entsprechenden Adaptationsschicht, um alle RSSP-II-Funktionsmodule des Protokollstapels in einer Bibliotheksdatei zu kompilieren, die in den A-, B- und C-Maschinen angewendet werden soll, darüber hinaus umfasst:
separat eine sicherheitsbezogene Modul-MASL-Schicht des Protokollstapels RSSP-II in einem SFM-Modul einer Untergruppe-037 zu kompilieren, die in der A/B-Maschine angewendet werden soll, wobei dem Protokollstapel eine Systemadaptationsschicht und eine Anwendungsadaptationsschicht hinzugefügt wird.

4. Verfahren zur separaten Anwendung eines RSSP-II-Sicherheitsprotokolls nach einem der Ansprüche 1 bis 3, wobei das Verwenden einer entsprechenden Adaptationsschicht, um alle RSSP-II-Funktionsmodule des Protokollstapels in einer Bibliotheksdatei zu kompilieren, die in den A-, B- und C-Maschinen angewendet werden soll, darüber hinaus umfasst:
eine sicherheitsbezogene Modul-MASL-Schicht zwischen einem SFM-Modul einer Untergruppe-037 und dem Protokollstapel RSSP-II gemeinsam zu nutzen, und das SFM-Modul und die MASL-Schicht in einer Bibliotheksdatei zu kompilieren, die auf die A/B-Maschine angewendet werden soll, wobei der A/B-Maschine eine Systemadaptationsschicht, eine Netzwerkadaptationsschicht und eine Anwendungsadaptationsschicht hinzugefügt werden.

## Revendications

1. Procédé de déploiement séparé de protocoles de sécurité RSSP-II, comprenant :
l'ajout de différentes couches d'adaptation à une pile de protocoles ; et
l'utilisation d'une couche d'adaptation correspondante pour compiler tous les modules fonctionnels RSSP-II de la pile de protocoles en un fichier bibliothèque devant être déployé dans des machines A, B et C ;
**caractérisé en ce que** la couche d'adaptation inclut une couche d'adaptation système, une couche d'adaptation réseau et une couche d'adaptation application ; et
sachant que les machines A et B sont des unités de traitement logique de sécurité et la machine C est une unité de communication.

2. Le procédé de déploiement séparé de protocoles de sécurité RSSP-II selon la revendication 1, sachant que l'utilisation d'une couche d'adaptation correspondante pour compiler tous les modules fonctionnels RSSP-II de la pile de protocoles en un fichier bibliothèque devant être déployé dans les machines A, B et C comprend spécifiquement :
en l'absence de distinction entre fonctions de sécurité et fonctions autres que fonctions de sécurité, la compilation de tous les modules fonctionnels RSSP-II de la pile de protocoles en un fichier bibliothèque devant être déployé dans la machine A/B, sachant que la couche d'adaptation ajoutée à la pile de protocoles est une couche d'adaptation système, une couche d'adaptation réseau et une couche d'adaptation application ;
en cas de distinction entre fonctions de sécurité et fonctions autres que fonctions de sécurité, la compilation de modules relatifs à la sécurité de la pile de protocoles RSSP-II en un fichier bibliothèque devant être déployé dans la machine A/B, et la compilation des modules autres que modules de sécurité en un fichier bibliothèque devant être déployé dans la machine C, sachant que la machine A/B ajoute une couche d'adaptation système et une couche d'adaptation application à la pile de protocoles, et la machine C ajoute une couche d'adaptation réseau et une couche d'adaptation application à la pile de protocoles.

3. Le procédé de déploiement séparé de protocoles de sécurité RSSP-II selon l'une quelconque des revendications 1 à 2, sachant que l'utilisation d'une couche d'adaptation correspondante pour compiler tous les modules fonctionnels RSSP-II de la pile de protocoles en un fichier bibliothèque devant être déployé dans les machines A, B et C comprend en outre :
la compilation séparée d'une couche MASL de module relatif à la sécurité de la pile de protocoles RSSP-II en un module SFM de Subset-037 devant être déployé dans la machine A/B, sachant qu'une couche d'adaptation système et une couche d'adaptation application sont ajoutées à la pile de protocoles.

4. Le procédé de déploiement séparé de protocoles de sécurité RSSP-II selon l'une quelconque des revendications 1 à 3, sachant que l'utilisation d'une couche d'adaptation correspondante pour compiler tous les modules fonctionnels RSSP-II de la pile de protocoles en un fichier bibliothèque devant être déployé dans les machines A, B et C comprend en outre :
le partage d'une couche MASL de module relatif à la sécurité entre un module SFM de Subset-037 et la pile de protocoles RSSP-II, et la compilation du module SFM et de la couche MASL en un fichier bibliothèque devant être déployé dans la machine A/B, sachant qu'une couche d'adaptation système, une couche d'adaptation réseau et une couche d'adaptation application sont ajoutées à la machine A/B.
